# EUROPÄISCHE PATENTSCHRIFT

(11) **EP 1 998 150 B1**
(45) Veröffentlichungstag und Bekanntmachung des Hinweises auf die Patenterteilung: **30.04.2014**
(21) Anmeldenummer: 08007309.1
(22) Anmeldetag: 14.04.2008
(51) Int. Cl.: G01G 3/14, G01L 1/22

(54) **Wägezelle**
Weighing cell
Cellule de pesage

(30) Priorität: 31.05.2007 DE 102007025474
(43) Veröffentlichungstag der Anmeldung: 03.12.2008
(73) Patentinhaber: Schenck Process GmbH, 64293 Darmstadt (DE)
(72) Erfinder: Müller, Klaus, 64521 Groß Gerau (DE)

(56) Entgegenhaltungen:
- EP-A- 0 798 544
- WO-A-00/73757
- US-A- 3 520 182

## Beschreibung

Die Erfindung betrifft eine Wägezelle mit einem oberen zentralen Krafteinleitungsteil, der mit einem unteren ringförmigen Kraftausleitungsteil verbunden ist, sowie mit einem eine zentrale Ausnehmung umgebenden Verformungsring, der zwischen dem Krafteinleitungsteil und dem Kraftausleitungsteil ausgebildet und durch eine Ringnut zum Kraftausleitungsteil beabstandet ist, eine zu einer axialen Krafteinleitungsrichtung sich quer erstreckende Stirnfläche besitzt und mit elektromechanischen Wandlern bestückt ist.

Bei der Wägezelle gemäß Dokument EP 798544 ist der Verformungsring über einen ersten Rohrabschnitt mit dem Krafteinleitungsteil und über einen zweiten Rohrabschnitt mit dem Kraftausleitungsteil verbunden. Der Verformungsring weist eine untere Stirnfläche sowie eine dazu parallele obere Fläche auf, die beide mit elektromechanischen Wandlern in Form von Dehnungsmeßstreifen bestückt sind. Bei Krafteinleitung verformt sich der Verformungsring nicht nur axial sondern erfährt auch eine Drehung, wobei sich sein unterer Teil nach radial außen und sein oberer Teil nach radial innen bewegt. Mit den auf die beiden Flächen aufgebrachten Dehnungsmeßstreifen wird daher auch die Differenz zwischen den unteren und oberen Verformungen des Verformungsringes erfasst. Diese bekannte Wägezelle ist darin nachteilig, dass ihre Konstruktion einen erheblichen Aufwand erfordert.

In dem Dokument EP 288 985 werden Wägezellen mit einem Verformungsring beschrieben, auf dessen oberen und unteren Seite elektromechanische Wandler appliziert sind, die durch Membrane abgedeckt werden müssen. Kraftübertragungsstege zwischen Krafteinleitungsteil und Kraftausleitungsteil sind auf gleicher Höhe mittig innen und außen am Verformungsring angebracht. Die tiefen Eindrehungen im Meßfederkörper sowie die komplizierte Verdrahtung sind in der Herstellung mit hohem Aufwand verbunden. Außerdem treten an den Membranen oft mechanische Beschädigungen und Korrosion auf.

WO-0073757 offenbart eine weitere bekannte Wägezelle.

Der Erfindung liegt daher die Aufgabe zugrunde, die eingangs genannte Wägezelle zu verbessern. Dazu ist bei dieser Wägezelle erfindungsgemäß vorgesehen, dass das Krafteinleitungsteil und das Kraftausleitungsteil durch einen nach radial außen und unten weisenden Steg verbunden sind, aus dessen Innenseite sich der Verformungsring nach radial innen und unten erstreckt. Dadurch ist sichergestellt, dass bei auf das Krafteinleitungsteil axial einwirkender Kraft eine Verdrehung des Verformungsringes praktisch ausgeschlossen ist und für die Kraftmessung nur dessen radiale Verformung erfasst wird. Damit wird die Genauigkeit der Messung ganz wesentlich erhöht, weil eine durch eine Drehung bedingte Fehlerquelle ausgeschlossen ist. Ferner sind die Geometrie der Wägezelle, ihre Herstellung und die Verdrahtung der Dehnungsmeßstreifen relativ einfach und die Wägezelle hat bei gleicher Last einen kleineren Durchmesser.

Als bevorzugte Ausführungsform der Erfindung empfiehlt es sich, dass der Verformungsring eine kleinere axiale Länge aufweist als die axiale Länge des Kraftausleitungsteils. Vorteilhaft ist außerdem, wenn die Tiefe der Ringnut wesentlich kleiner ist als die Tiefe der Ausnehmung. Schließlich kann der Verformungsring an seinem unteren und inneren Ende einen achsparallelen Wandabschnitt aufweisen, an welchem die elektromechanischen Wandler, also zweckmäßig Dehnungsmeßstreifen, appliziert sind. Als Ergänzung oder Alternative kann zudem in Betracht kommen, elektromechanische Wandler auf der Stirnfläche anzubringen. Weiter ist vorteilhaft, wenn die von dem ringförmigen Wandabschnitt umschlossene Öffnung einen kleineren Durchmesser aufweist als die Ausnehmung. Hierfür sieht eine besonders günstige Gestaltung der becherförmigen Ausnehmung vor, dass sie eine ringförmige Seitenwand aufweist, die nach innen und unten geneigt ist, den Verformungsring innen begrenzt und in den Wandabschnitt übergeht. Dann kann am Übergang von der Seitenwand zu dem Wandabschnitt eine Platte etwa aus Kunststoff eingefügt sein, die ein mit den elektromechanischen Wandlern elektrisch verbundene elektronische Schaltung trägt. Allgemein dient es weiterhin der Ausschaltung von etwaigen Meßfehlern, wenn erfindungsgemäß die elektromechanischen Wandler so angebracht, sind, dass sie gleichen gegenseitigen Abstand haben und symmetrisch um die Achse der Wägezelle angeordnet sind.

Im Übrigen sind zweckmäßige Ausgestaltungen der Erfindung in den abhängigen Ansprüchen angegeben. Die Erfindung wird nachstehend an einem in der beigefügten Zeichnung dargestellten Ausführungsbeispiel näher beschrieben. Es zeigen:

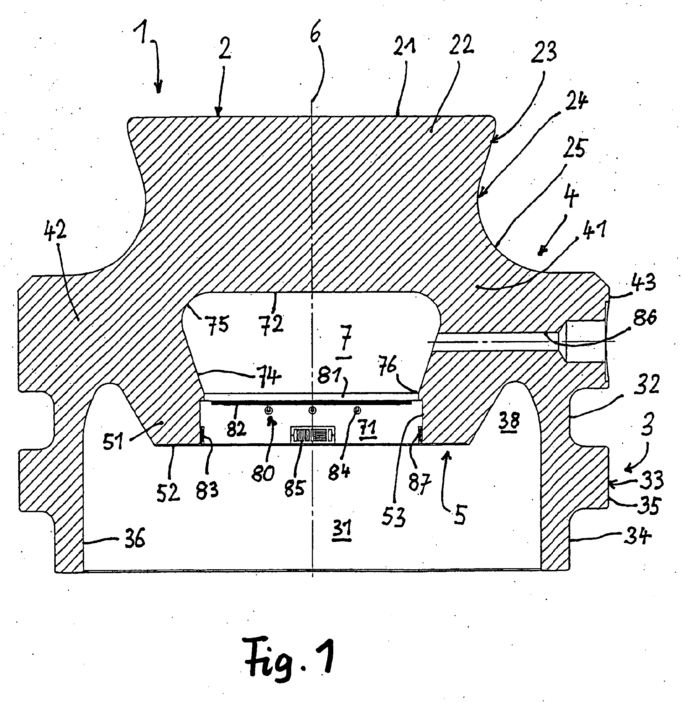

Figur 1: einen Axialschnitt durch eine mit den Merkmalen der Erfindung ausgerüsteten Wägezelle, und

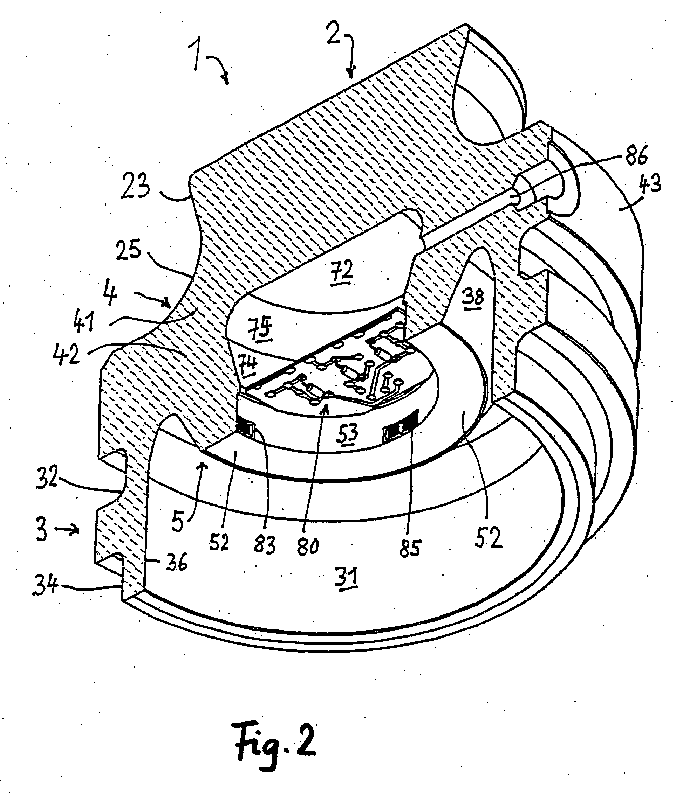

Figur 2: eine perspektivische Ansicht des Axialschnittes der Wägezelle nach Figur 1 von schräg unten.

Die aus einem Stahlblock durch entsprechende Bearbeitung hergestellte einteilige und runde Wägezelle 1 mit Achse 6 besteht aus einem oberen Krafteinleitungsteil 2, einem unteren, rohrförmigen Kraftausleitungsteil 3 und einem beide Teile verbindenden Steg 4, aus dessen Innenseite ein Verformungsring 5 nach innen und unten vorsteht.

Das Krafteinleitungsteil 2 besitzt eine ebene Oberfläche 21, über die die zu messende axial aufgebrachte Kraft in den Korpus 22 des Krafteinleitungsteils eingeleitet wird. Die Außenkontur des Korpus 22 ist im oberen Abschnitt 23 im dargestellten Schnitt schwalbenschwanzförmig und zur Achse 6 hin gerichtet und im unteren Abschnitt 24 folgt die Außenkontur einem von der Achse 6 weg gerichteten Kreisbogen 25, der sich über etwas mehr als einen rechten Winkel erstreckt, so dass er unten praktisch quer zur Achse 6 nach außen endet. Bei etwa der Hälfte des Kreisbogens geht der Korpus 22 in den ringförmigen Stegabschnitt 41 über, der innen in noch näher anzugebender Weise von einer Ausnehmung 7 begrenzt wird.

Unterhalb des äußeren Endes des Kreisbogens 25 erweitert sich der Stegabschnitt 41 zu einem massiven Zwischenstück 42, aus dessen Innenseite der Verformungsring 5 nach innen unten vorsteht, und das außen von einer achsparallelen Außenwand 43 begrenzt wird. Das Zwischenstück 42 des Steges 4 setzt sich nach unten in das rohrförmige Kraftausleitungsteil 3 fort. Durch zwei axial beabstandete Einschnitte 32, 34 ist ein Ring 33 gebildet, dessen achsparallele Außenfläche 35 mit der Außenwand 43 fluchtet. Die axiale Länge des Verformungsringes 5 ist kleiner als die axiale Länge des Kraftausleitungsteils 3.
Im Übrigen umschließt das Kraftausleitungsteil 3 einen becherförmigen Hohlraum 31, in welchen mittig der untere ringförmige Abschnitt 51 des Verformungskörpers 5 von oben hineinragt. Der Abschnitt 51 endet unten mit einer Ringfläche 52, die sich quer zur Achse 6 und etwa in Höhe des unteren Endes des Einschnittes 32 erstreckt. Der Abschnitt 51 ist von der Innenwand 36 des Kraftausleitungsteils 3 durch eine im dargestellten Querschnitt domförmige Ringnut 38 beabstandet, die einerseits von der Innenwand 36 und andererseits von der ebenen Außenfläche des Abschnittes 51 gebildet wird, die ferner eine Tiefe besitzt, die kleiner ist als die Tiefe der Ausnehmung 7 und die nur etwa bis zur halben Höhe der Ausnehmung 7 plus einer zylindrischen Ausbohrung 71 reicht.

Der Hohlraum 31 setzt sich nach oben in die erwähnte mittige und zylindrische Ausbohrung 71 fort, deren ringförmige Seitenwand von einem achsparallelen und ringförmigen Wandabschnitt 53 des Verformungsringes 5 gebildet ist. Die Ausbohrung 71 geht nach oben in die Ausnehmung 7 über, welche eine obere, sich symmetrisch zur Achse 6 quer erstreckende, kreisförmige und ebene Begrenzungsfläche 72 sowie eine Seitenfläche 74 aufweist. Die vom Wandabschnitt 53 umschlossene Öffnung der Ausbohrung 71 hat einen Durchmesser, der etwa halb so groß ist wie die gesamte seitliche Ausdehnung der Wägezelle 1 und jedenfalls kleiner ist als der größte Durchmesser der Ausnehmung 7. Die Seitenfläche 74 schließt oben mit einem Bogen 75 an die Begrenzungsfläche 72, begrenzt den Verformungsring 5 nach innen und schließt nach unten über einen kleinen Absatz 76 an den Wandabschnitt 53 an. Der Absatz 76 ist so geformt, dass eine leichte Trägerplatte 81 an ihm gehalten sein kann, die an ihrer Unterseite eine Platine 82 einer elektronischen Schaltung 80 mit Schaltungselementen 84 trägt. Die Schaltung 80 kann auch Abgleichelemente für Temperatur, Nullpunkt und Kennwert aufweisen. Diese sind vermöge des unten offenen Hohlraums 31 leicht von außen zugänglich.

An dem achsparallelen Wandabschnitt 53 sind mehrere Dehnungsmeßstreifen in Umfangsrichtung in gleichem gegenseitigem Abstand appliziert, und zwar nahe der unteren Kante zur Ringfläche 52. Im dargestellten Ausführungsbeispiel sind vier Dehnungsmeßstreifen vorgesehen, von denen nur die drei DMS 83, 85, 87 zu erkennen sind. Jeder der Dehnungsmeßstreifen (= DMS) steht mit der elektronischen Schaltung 80 über nicht dargestellte Leitungen in elektrischer Verbindung. Zur Minderung von Positionierungsfehlern empfiehlt es sich, acht Dehnungsmeßstreifen in Umfangsrichtung gleich verteilt an der Unterkante des Wandabschnittes 53 zu applizieren. Die Messungen von Kräften ergeben jedoch auch ausreichende Genauigkeit, wenn nur zwei Dehnungsmeßstreifen benutzt werden. Ferner kommt in Betracht, Dehnungsmeßstreifen mit einem Meßgitter zu verwenden, das dann abwechselnd um 90° gedreht werden muss.

Zu erwähnen ist noch eine Montagebohrung 86, die seitlich von außen quer zur Achse 6 durch das Zwischenstück 42 eingebracht ist und in die Ausnehmung 7 mündet. Durch die Montagebohrung 86 können Kabel zur Spannungsversorgung und Signalübertragung an die Schaltung 80 herangeführt werden. Schließlich kann der nach unten prinzipiell offene Hohlraum 31 durch eine eingefügte Membran verschlossen werden, so dass die Wägezelle 1 dann dauerhaft vor Feuchtigkeit geschützt ist und auch in explosionsgeschützten Räumen eingesetzt werden kann.

Für die Wägezelle 1 ist charakteristisch, dass der prinzipiell achsparallele Kraftfluß beim Übergang vom Krafteinleitungsteil 2 zum Kraftausleitungsteil 3 durch den Steg 4 nur wenig richtungsmäßig nach außen abgelenkt wird, was zur Folge hat, dass der Verformungsring 5 überwiegend eine radial auswärts gerichtete Verformung, jedenfalls praktisch keine Verdrehung erfährt. Die Senkrechte auf diejenige Linie, die durch die Mittelpunkte der Krümmungen 25 und 75 verläuft, bildet zur Achse 6 je nach Ausführungsform der Wägezelle einen Winkel zwischen etwa 20° und etwa 70°. An dem beschriebenen Ort der Applikation der elektromeschanischen Wandler treten einerseits die größten Zugspannungen im Verformungsring auf und andererseits sind hier die Störeffekte durch die Kraftein- und Kraftausleitung am kleinsten. Am genannten Ort herrscht im Verformungsring ein homogenes Spannungsfeld bei Krafteinleitung, was zu einer annähernd rein radialen Aufweitung des Verformungsringes führt. Dadurch führen Positionierungsfehler der Dehnungsmßstreifen zu einer Unempfindlichkeit gegen Querkräfte, das heißt solche Kräfte, die nicht genau achsparallel und/oder außermittig in die Krafteinleitungsplatte 2 eingeleitet werden. Die ist Wägezelle 1 ist nicht nur eichfähig, das heißt, dass die Messungen einer eingeleiteten Kraft innerhalb amtlicherseits zugelassener Intervalle bleiben, sondern es wird auch eine ausgezeichnete enge Fehlertoleranz erreicht, die bei etwa 0,01% bis etwa 0,3% der jeweiligen Nennlast liegt. Mit der Wägezelle 1 sind Kräfte messbar, die von etwa 10t bis zu etwa 1000t und mehr reichen, wobei die konkrete dimensionsmäßige Ausgestaltung der Wägezelle entsprechend angepasst werden muss.

## Patentansprüche

1. Wägezelle mit einem oberen zentralen Krafteinleitungsteil (2), das mit einem unteren ringförmigen Kraftausleitungsteil (3) verbunden ist, mit einem eine zentrale Ausnehmung (7) umgebenden Verformungsring (5), der zwischen dem Krafteinleitungsteil und dem Kraftausleitungsteil ausgebildet und durch eine Ringnut (38) zum Kraftausleitungsteil beabstandet ist, eine zu einer axialen Krafteinleitungsrichtung (6) sich quer erstreckende Stirnfläche (52) besitzt sowie mit elektromechanischen Wandlern (83, 85, 87) bestückt ist, **dadurch gekennzeichnet, dass** das Krafteinleitungsteil und das Kraftausleitungsteil durch einen nach radial außen und unten weisenden Steg (4) verbunden sind, aus dessen Innenseite der Verformungsring (5) sich nach radial innen und unten erstreckt.

2. Wägezelle nach Anspruch 1, **dadurch gekennzeichnet, dass** der Verformungsring an seinem unteren und inneren Ende einen achsparallelen Wandabschnitt (53) aufweist, an welchem die elektromechanischen Wandler appliziert sind.

3. Wägezelle nach Anspruch 2, **dadurch gekennzeichnet, dass** die von dem ringförmigen Wandabschnitt (53) umschlossene Öffnung (71) einen kleineren Durchmesser aufweist als die Ausnehmung (7).

4. Wägezelle nach einem oder mehreren der vorstehenden Ansprüche, **dadurch gekennzeichnet, dass** die becherförmige Ausnehmung (7) eine ringförmige Seitenwand (74) aufweist, die nach unten und innen geneigt ist, den Verformungsring (5) innen begrenzt und in den Wandabschnitt (53) übergeht.

5. Wägezelle nach einem oder mehreren der vorstehenden Ansprüche, **dadurch gekennzeichnet, dass** die Tiefe der Ringnut (38) wesentlich kleiner ist als die Tiefe der Ausnehmung (7).

6. Wägezelle nach einem oder mehreren der vorstehenden Ansprüche, **dadurch gekennzeichnet, dass** elektromechanische Wandler auf der Stirnfläche (52) appliziert sind.

7. Wägezelle nach einem oder mehreren der vorstehenden Ansprüche, **dadurch gekennzeichnet, dass** die elektromechanischen Wandler mit gleichem gegenseitigen Abstand symmetrisch um die Achse (6) angeordnet sind.

8. Wägezelle nach einem oder mehreren der vorstehenden Ansprüche, **dadurch gekennzeichnet, dass** die axiale Länge des Verformungsrings (5) kleiner ist als die axiale Länge des Kraftausleitungsteils (3).

9. Wägezelle nach einem der Ansprüche 4 bis 8, **dadurch gekennzeichnet, dass** am Übergang von der Seitenwand (74) zu dem Wandabschnitt (53) eine Trägerplatte (81) eingefügt ist, die eine mit den elektromechanischen Wandlern (83, 85, 87) elektrisch verbundene elektronische Schaltung (80) trägt.

## Claims

1. Load cell having an upper, central force introduction part (2) that is connected to a lower, annular force exit part (3), having a deformation ring (5) that surrounds a central recess (7), and that is formed between the force introduction part and the force exit part, and that is spaced apart from the force exit part by an annular groove (38) and has a face (52) that extends crosswise to an axial direction of force introduction (6) and is equipped with electromechanical transducers (83, 85, 87), **characterized in that** the force introduction part and the force exit part are connected by a web (4) that is directed radially outward and downward, from the inside of which the deformation ring (5) extends radially inward and downward.

2. Load cell according to claim 1, **characterized in that** the deformation ring has, on its lower and inner end, a wall section (53) parallel to the axis, to which the electromechanical transducers are applied.

3. Load cell according to claim 2, **characterized in that** the opening (71) enclosed by the annular wall section (53) has a smaller diameter than the recess (7).

4. Load cell according to one or more of the preceding claims, **characterized in that** the cuplike recess (7) has an annular side wall (74) that is angled downward and inward, that delimits the inside of the deformation ring (5), and that transitions into the wall section (53).

5. Load cell according to one or more of the preceding claims, **characterized in that** the depth of the annular groove (38) is substantially smaller than the depth of the recess (7).

6. Load cell according to one or more of the preceding claims, **characterized in that** electromechanical transducers are applied to the face (52).

7. Load cell according to one or more of the preceding claims, **characterized in that** the electromechanical transducers are arranged symmetrically about the axis (6) with equal mutual spacing.

8. Load cell according to one or more of the preceding claims, **characterized in that** the axial length of the deformation ring (5) is shorter than the axial length of the force exit part (3).

9. Load cell according to one of claims 4 through 8, **characterized in that** a support plate (81) that carries an electronic circuit (80) which is electrically connected to the electromechanical transducers (83, 85, 87) is inserted at the transition from the side wall (74) to the wall section (53).

## Revendications

1. Cellule de pesage comprenant ane partie supérieure centrale d'introduction de force (2) qui est reliée à une partie inférieure annulaire de sortie de force (3), comprenant une bague de déformation (5) entourant un évidement central (7), laquelle est réalisée entre la partie d'introduction de force et la partie de sortie de force, est espacée de la partie d'introduction de force par une rainure annulaire (38), présente une surface frontale (52) s'étendant transversalement par rapport à une direction axiale d'introduction de force (6) et est équipée de convertisseurs (83, 85, 87) électromécaniques, **caractérisée en ce que** la partie d'introduction de force et la partie de sortie de force sont reliées par une nervure (4) orientée radialement vers l'extérieur et vers le bas, à partir du côté intérieur de laquelle s'étend la bague de déformation (5) radialement vers l'intérieur et vers le bas.

2. Cellule de pesage selon la revendication 1, **caractérisée en ce que** la bague de déformation comprend à son extrémité inférieure et intérieure une portion de paroi (53) parallèle à l'axe, sur laquelle sont appliqués les convertisseurs électromécaniques.

3. Cellule de pesage selon la revendication 2, **caractérisée en ce que** l'ouverture (71) entourée par la portion de paroi annulaire (53) présente un diamètre inférieur à celui de l'évidement (7).

4. Cellule de pesage selon l'une quelconque ou plusieurs des revendications précédentes, **caractérisée en ce que** l'évidement en forme de cuvette (7) comprend une paroi latérale annulaire (74) qui est inclinée vers le bas et vers l'intérieur, délimite intérieurement la bague de déformation (5) et se prolonge par la portion de paroi (53).

5. Cellule de pesage selon l'une quelconque ou plusieurs des revendications précédentes, **caractérisée en ce que** la profondeur de la rainure annulaire (38) est considérablement inférieure à la profondeur de l'évidement (7).

6. Cellule de pesage selon l'une quelconque ou plusieurs des revendications précédentes, **caractérisée en ce que** des convertisseurs électromécaniques sont appliqués sur la surface frontale (52).

7. Cellule de pesage selon l'une quelconque ou plusieurs des revendications précédentes, **caractérisée en ce que** les convertisseurs électromécaniques sont disposés de manière symétrique autour de l'axe (6) de manière à présenter des espacements mutuels identiques.

8. Cellule de pesage selon l'une quelconque ou plusieurs des revendications précédentes, **caractérisée en ce que** la longueur axiale de la bague de déformation (5) est inférieure à la longueur axiale de la partie de sortie de force (3) .

9. Cellule de pesage selon l'une quelconque des revendications 4 à 8, **caractérisée en ce qu'**une plaque de support (81) est insérée au niveau de la transition de la paroi latérale (74) à la portion de paroi (53), laquelle plaque de support porte un circuit électronique (80) connecté électriquement aux convertisseurs (83, 85, 87) électromécaniques.
